# EUROPÄISCHE PATENTANMELDUNG

(11) **EP 2 045 228 A2**
(43) Veröffentlichungstag der Anmeldung: **08.04.2009**
(21) Anmeldenummer: 08017380.0
(22) Anmeldetag: 02.10.2008
(51) Int. Cl.: C04B 38/06, C04B 33/135

(54) **Verfahren zur Herstellung eines Feuerfestmaterials sowie Feuerfestmaterial**

(30) Priorität: 05.10.2007 DE 102007048118; 05.10.2007 DE 102007048105
(71) Anmelder: Drache Umwelttechnik GmbH, 65582 Diez (DE)
(72) Erfinder: Marpert, Andreas, 46359 Helden (DE)
(74) Vertreter: Herden, Andreas F.

(57) **Zusammenfassung**

Die Erfindung betrifft ein Verfahren zur Herstellung eines Feuerfestmaterials, insbesondere eines Filters für die Gießereitechnik, wobei als Bindemittel Flugasche verwendet wird.

## Beschreibung

### Gebiet der Erfindung

Die Erfindung betrifft ein Verfahren zur Herstellung eines Feuerfestmaterials sowie ein Feuerfestmaterial. Insbesondere betrifft die Erfindung die Herstellung eines Filters für Metallschmelzen.

### Hintergrund der Erfindung

Feuerfestmaterialien werden insbesondere in der Gießereitechnik als Formteile wie Gießrinnen, Tiegel, Ausgussdüsen etc. verwendet.

In der Gießereitechnik verwendete Filter sind ebenfalls bekannt. Dabei handelt es sich zumeist um sogenannte Schaumkeramiken aus Zirkonoxid, Aluminiumoxid oder Siliziumcarbid.

Als Feuerfestmaterialen werden beispielsweise Fused Silica- oder Aluminiumoxydhaltige oder Zement gebundene Materialien verwendet.

Es ist weiter bekannt, dass die Flugasche, also Verbrennungsabfälle aus Hochöfen als Zuschlagstoffe, hauptsächlich für die Bauindustrie aber auch für Feuerfestmaterialien verwendet wird.

Flugasche hat den Vorteil, dass es als Abfallprodukt ein recht günstiger Rohstoff ist. Weiter ist Flugasche, als Zusatzstoff zur Wärmeisolation recht gut geeignet.

Bei bekannten Feuerfestmaterialien beschränkt sich die Verwendung von Flugasche aber auf einen Füllstoff. Es ist also zusätzlich zumindest noch ein Binder wie beispielsweise Zement und/oder ein phosphathaltiges Bindemittel nötig, um die weiteren Partikel in gebranntem Zustand zusammenzuhalten.

Derartige Bindemittel sind zum einen teuer und ermöglichen nicht die Bereitstellung von Feuerfestmaterialien, welche im Wesentlichen aus Flugasche bestehen. Vielmehr sind zum Erreichen einer ausreichenden Festigkeit recht hohe Anteile an Bindemittel nötig.

Weiter dauert der Brennprozess bei herkömmlichen Feuerfestmaterialien, insbesondere bei Formteile oft viele Stunden. Aufgrund des geringen Anlagendurchsatzes und der teuren Rohstoffe sind daher bekannte Feuerfestmaterialien recht teuer.

Weiter neigen bekannte Feuerfestmaterialien, insbesondere als Formteile ausgestaltet, zur Rissanfälligkeit wobei Rissspalten in der Rinnenoberfläche die Schmelze verunreinigen können.

### Aufgabe der Erfindung

Der Erfindung liegt demgegenüber die Aufgabe zugrunde, ein Verfahren zur Herstellung eines Feuerfestmaterials, sowie ein Feuerfestmaterial bereitzustellen, bei welchem die genannten Nachteile des Standes der Technik zumindest reduziert werden.

Insbesondere ist es Aufgabe der Erfindung, auf ein Bindemittel im herkömmlichen Sinne, wie Zement und/oder ein phosphathaltiges Bindemittel, verzichten zu können.

Eine weitere Aufgabe der Erfindung ist es, den Anlagendurchsatz bei der Herstellung von Feuerfestmaterialien zu erhöhen.

Eine weitere Aufgabe der Erfindung ist es, auf zusätzliche Beschichtungen bei Formteilen verzichten zu können.

Es ist weiter Aufgabe der Erfindung, die Verwendung eines möglichst hohen Anteils an Flugasche in Feuerfestmaterialien zu ermöglichen.

### Zusammenfassung der Erfindung

Die Erfindung wird bereits durch ein Verfahren zur Herstellung eines Feuerfestmaterials, ein Feuerfestmaterial, sowie durch die Verwendung von Flugasche als Bindemittel nach einem der unabhängigen Ansprüche erreicht.

Bevorzugte Ausführungsformen und Weiterbildungen der Erfindung sind den jeweiligen Unteransprüchen zu entnehmen.

Danach ist ein Verfahren zur Herstellung eines Feuerfestmaterials für die Gießereitechnik vorgesehen.

Die Erfinder haben herausgefunden, dass es in überraschender Weise bei geeigneten Prozessparametern möglich ist, auf die Verwendung eines Bindemittels im herkömmlichen Sinne zu verzichten.

Vorher war man davon ausgegangen, dass Flugasche beim Brennen, insbesondere nach dem Verbrennen von organischen Rohstoffen ohne Zusatz eines geeigneten Bindemittels zerfällt.

Die Erfinder haben nunmehr aber herausgefunden, dass insbesondere wenn der Temperaturanstieg zumindest nach dem Herausbrennen von organischen Rohstoffen oder nach dem Verflüchtigen eines Grünbinders hinreichend schnell ist, das Material nicht zerfällt, sondern die Flugasche als Bindemittel wirkt, so dass die Form des Materials im Wesentlichen erhalten bleibt.

Es ist daher nicht notwendig, dass Feuerfestmaterial in einer Form zu backen. Vielmehr bleibt das Material selbst beim Brennen formstabil.

Es ist zu vermuten, dass es sich bei der Verwendung von Flugasche als Bindemittel zumindest hauptsächlich nicht um einen Sinterprozess handelt, sondern dass durch eine Bindephase die Flugasche Stabilität erlangt.

Insbesondere betrifft das Verfahren die Herstellung eines schaumkeramikartigen Filters, wobei unter "schaumkeramikartig" nicht zwingend ein keramischer Sinterwerkstoff verstanden wird, sondern ein schaumkeramikartiger Filter im Sinne der Erfindung ist jeder Filter mit ähnlichen Eigenschaften, wie bekannte Schaumkeramikfilter.

Bei dem Verfahren zur Herstellung eines Filters wird ein Kunststoffschaum bereitgestellt und ein Flugasche enthaltender Schlicker auf bzw. in den Kunststoffschaum eingebracht.

Durch eine Temperaturbehandlung, insbesondere einen Brennvorgang, wird der Schlicker verfestigt, wobei vor oder während des Verfestigens der Kunststoffschaum herausbrennt. Gemäß der Erfindung wird die Flugasche dabei als Bindemittel verwendet.

Da bei hinreichend schneller Erwärmung die Flugasche nach dem Herausbrennen des Kunststoffs als Bindemittel wirkt, bleibt der poröse Schlicker im Wesentlichen formstabil, so dass die Herstellung eines porösen Filters mit Flugasche als Bindemittel möglich ist. Der Filter weist vorzugsweise eine Reindichte zwischen 1,5 g/cm³ und 4 g/cm³ auf.

Das Feuerfestmaterial, insbesondere der Filter weist bei einer bevorzugten Ausführungsform der Erfindung eine offene Porosität von über 25%, bevorzugt über 55 % und besonders bevorzugt über 60 % auf.

Vorzugsweise wird dem Schlicker kein weiteres Bindemittel zugesetzt oder ein Bindemittel, welches lediglich als Grünbinder wirkt, sich also vor dem Einsetzen der Verfestigung, insbesondere vor dem Einsetzen eine Bindephase- oder eines Sinterprozesses sich verflüchtigt oder verbrennt.

Derartige Additive, welche als Grünbinder verwendet werden, sind vorzugsweise organische Stoffe, insbesondere Styrole, Acrylate und/oder Acrylsäureester. Das als Grünbinder verwendete Additiv dient dabei nur der besseren Formstabilität des Schlickers im Wesentlichen kalten Zustand.

Während der Temperaturbehandlung beträgt der Temperaturanstieg zwischen einer Temperatur von 300 °C und 700 °C zumindest zeitweise mehr als 3 °C/min., bevorzugt mehr als 7 °C/min. und besonders bevorzugt mehr als 10 °C/min. Vorzugsweise liegt zumindest der mittlere Temperaturanstieg zwischen einer Temperatur von 300°C und 700°C über den vorstehend genannten Werten. Es hat sich herausgestellt, dass insbesondere Temperaturgradienten von 300 °C bis 400 °C pro Stunde dazu führen, dass ein im Wesentlichen Flugasche enthaltender Schlicker stabil bleibt und es nicht zur Rissbildungen und Zerfallserscheinungen kommt. Die notwendige Temperaturerhöhung hängt dabei unter anderem von der Größe des zu brennenden Bauteils ab. Vorzugsweise können mit dem erfindungsgemäßen Verfahren Bauteile aus Feuerfestmaterialen mit einer Dicke von über 1 cm gebrannt werden. Die genannten Temperaturgradienten beziehen sich im Sinne der Anmeldung auf die Temperatur in einem Ofen oder einer ähnlichen Vorrichtung, in welcher der Schlicker zur Verfestigung erhitzt wird.

Insbesondere für größere Bauteile sind auch noch höhere Temperturgradienten vorgesehen, beispielsweise mehr als 20 °C/min.

Es hat sich herausgestellt, dass besonders kleine Bauteile sogar in einen bereits im Wesentlichen auf die Maximaltemperatur aufgeheizten Ofen, eventuell nach einer Trocknung, eingebracht werden können, ohne dass es zu einer Rissbildung kommt.

Vorzugsweise, insbesondere bei Bauteilen, die größer als 5 cm sind, wird die Temperaturbehandlung aber derart durchgeführt, dass zwischen einer Temperatur von 300 °C und 700 °C zumindest zeitweise der Temperaturanstieg weniger als 50 °C/min, bevorzugt weniger als 40 °C/min und besonders bevorzugt mehr als 30 °C/min beträgt.

Innerhalb der so definierten Temperaturgradienten erfüllt die verwendete Flugasche optimale Bindereigenschaften, ohne dass die Flugasche zerfällt oder es zu Spannungsrissen kommt.

Zur Steuerung dieses Temperaturverlaufs können sowohl Batch- als auch Rollenöfen verwendet werden.

Bei einer bevorzugten Ausführungsform der Erfindung beträgt der Temperaturanstieg oberhalb einer Temperatur von 750°C zumindest zeitweise, vorzugsweise während des Konsolidierens bzw. der Sinterung nur noch 200°C pro Stunde. Je nach Anwendung ist eine Haltezeit bei der Maximaltemperatur vorzugsweise zwischen 5 und 60 Min, besonders bevorzugt zwischen 10 und 20 Min. vorgesehen.

Durch eine Temperaturbehandlung, insbesondere einen Brennvorgang, wird der Schlicker verfestigt, wobei vor oder während des Verfestigens die Additive herausbrennen. Gemäß der Erfindung wird die Flugasche dabei als Bindemittel verwendet.

Der Schlicker enthält bei einer bevorzugten Ausführungsform der Erfindung mehr als 30 %, bevorzugt mehr als 50 % und besonders bevorzugt mehr als 60 % (Angaben jeweils in Gewichtsprozent) Flugasche. Es lässt sich ein Feuerfestmaterial herstellen, welches im gebrannten Zustand im Wesentlichen aus Flugasche besteht, insbesondere zu mehr als 80 %.

Mit dem Verfahren ist es möglich, die Temperaturbehandlung in einer Prozesszeit von weniger als 15 Stunden, sogar in Einzelfällen weniger als 5 Stunden durchzuführen

Der Anlagendurchsatz kann so erheblich erhöht werden, gleichzeitig sinkt auch der Energiebedarf bei der Herstellung von entsprechenden Bauteilen.

Dabei ist es besonders von Vorteil, dass wegen der kurzen Temperaturbehandlung bei gleichzeitig hohem Temperaturgradienten die Energie, welche sich durch die Verbrennung eines Schaumstoffs bei der Herstellung von Filtern freisetzt, zur Verfestigung und zur schnellen Temperaturerhöhung in wesentlich höherem Anteil an der gesamten für den Brennvorgang benötigten Energie genutzt werden kann.

Je nach Rezeptur wird eine Temperaturbehandlung mit zumindest mit 650 °C, bevorzugt mit zumindest 850 °C und besonders bevorzugt mit zumindest 900 °C durchgeführt.

Die Erfinder haben weiter herausgefunden, dass sich durch den Zusatz von Zuschlagstoffen der Schmelzpunkt, und damit die nötige Temperatur reduzieren oder erhöhen lässt.

Das erfindungsgemäße Feuerfestmaterial kann bei einer Weiterbildung der Erfindung noch weitere insbesondere als reine Füllstoffe dienende Zuschlagstoffe enthalten. Geeignete Zuschlagstoffe sind beispielsweise Zirkonsilikat, Kohlenstoff, Koks, Quarzmehl, Sand, Talkum, Speckstein, Siliziumsilikat, Silikate, Bentonit, Ton, Borsilikate, Borcarbide, Nitride, Kaolinschamotte, Schamotte, Kaolinit, Kaolin, Tonerde, Tonerdeporzellanmehl etc.

Ein bevorzugter Bereich für eine Temperaturbehandlung liegt bei 850 bis 1500°C.

Die Erfinder haben herausgefunden, dass es bei höheren Temperaturen, insbesondere bei über 1300°C zu Rissbildung kommen kann. Es ist zu vermuten, dass derartige Rissbildung aus einem Materialschwund aufgrund eines verstärkt einsetzenden Sinterprozesses resultiert.

Als Flugasche wird vorzugsweise Steinkohlenflugasche verwendet. Die mittlere Partikelgröße der Flugasche beträgt weniger als 1000 µm, bevorzugt weniger als 500 µm und besonders bevorzugt weniger als 250 µm.

Vorzugsweise wird Flugasche mit einer Kornrohdichte zwischen 1400 und 2800 kg/m³, bevorzugt zwischen 1800 und 2200 kg/m³ verwendet.

Weiter betrifft die Erfindung ein Feuerfestmaterial, insbesondere einen Filter, eine Schlichte, einen Speiser, einen Kleber, ein Formteil oder ein sonstiges Feuerfestbauteil für die Gießereitechnik, wobei das Feuerfestmaterial Flugasche als Bindemittel umfasst.

Vorzugsweise weist das Feuerfestmaterial keinen weiteren Binder auf oder einen weiteren Binder nur in geringer Konzentration auf, insbesondere weniger als 20 Gewichtsprozent, bevorzugt weniger als 5 Gewichtsprozent Bei einer Ausführungsform kann das Feuerfestmaterial im Wesentlichen aus Flugasche bestehen, also einen Flugascheanteil von mehr als 70 % aufweisen.

Dabei dient die Flugasche als eine Kombination aus Binder und Füller, weitere Füllstoffe und Bindemittel sind also nicht notwendig.

Alternativ, insbesondere für Hochtemperaturanwendungen, kann die Flugasche auch im Wesentlichen nur als Binder verwendet werden. Hierfür reichen zumindest 5 Gewichtsprozent, bevorzugt 10 Gewichtsprozent Anteil an Flugasche aus.

Insbesondere können im Wesentlichen Fused Silica- oder Aluminiumoxydhaltige, Feuerfestbauteile als Bindemittel Flugasche aufweisen.

Das Feuerfestmaterial weist vorzugsweise eine Reindichte zwischen 1,5 g/cm³ und 4 g/cm³ auf.

Bei einer Weiterbildung der Erfindung werden die Schlicker Hohlkugel beigegeben. Es hat sich gezeigt, dass so die Porosität bei gleichzeitig hoher Festigkeit erhöht werden kann. Man vermutet, dass dieser Effekt auf ein Platzen der Hohlkugeln beim Brennen zurück zu führen ist, wodurch die Porosität steigt, gleichzeitig das Material aber verdichtet wird.

Es lassen sich durch die Verwendung von Flugasche als Bindemittel Feuerfestmaterialien mit überraschend hoher Festigkeit erreichen. So kann insbesondere durch die Brenntemperatur die Festigkeit des Feuerfestmaterials auf Werte zwischen 0,15 und 5 MPa eingestellt werden (3-Punkt Biegefestigkeit gemessen mit Prüfgerät des Typs Zwick).

Es ist zu vermuten, dass die höhere Festigkeit durch eine stärkere Schwindung des Materials bewirkt wird. In diesem Zusammenhang versteht sich, dass unter dem Merkmal "die Form bleibt im Wesentlichen erhalten" nicht verstanden wird, dass sich die Form überhaupt nicht ändert, sondern dass selbstverständlich bei Sintervorgängen übliche Schwindungen des Materials gegeben sind.

Weiter betrifft die Erfindung die Verwendung von Flugasche als Bindemittel bei der Herstellung von Filtern, Schlichten, Speisern, Klebern und/oder Formteile für die Gießereitechnik.

Eine Schlichte, welche im ungebrannten Zustand auf Bauteile aufgetragen wird, wird also auch als Feuerfestmaterial im Sinne der Erfindung verstanden.

Bei der Herstellung wird einem verwendeten Schlicker mehr als 5 Gewichtsprozent, bevorzugt mehr als 10 Gewichtsprozent Flugasche zugegeben.

Bei einer bevorzugten Ausführungsform der Erfindung wird Flugasche mit folgender Zusammensetzung verwendet (Anteile in Gewichtsprozent, Wasser wird zu der Rezeptur hinzugefügt, bis die gewünschte Viskosität der Mischung erreicht ist und geht somit nicht in die Berechnung der Anteile ein):

| | |
|---|---|
| SiO₂ | 40 bis 60 % |
| Al₂O₃ | 15 bis 30 % |
| Eisenoxyd | 0 bis 10 % |
| Calciumoxyd | 0 bis 10 % |
| Schwefeloxyde | 0 bis 1 % |
| Kaliumoxyd | 0 bis 5 % |
| Natriumoxyd | 0 bis 1 % |

Eine bevorzugte Rezeptur für einen Filter, eine Schlichte, einen Speiser oder einen Kleber enthält zumindest einen folgender Bestandteile in folgender Menge (Anteile in Gewichtsprozent ohne Wasser):

| | |
|---|---|
| Flugasche | 30 bis 90 % |
| Tonerdeporzellanmehl | 5 bis 20 % |
| Kaolinit | 5 bis 20 % |
| Tonerde | 5 bis 20 % |
| Entschäumer | 0,2 bis 1 % |
| Netzmittel | 0,2 bis 1 % |
| Additiv zu Grünbindung, vorzugsweise | |
| auf organischer Basis, z.B. Tapetenkleister oder Acronaltypen der Fa. BASF | 2 bis 12 %. |

Eine weitere bevorzugte Rezeptur, insbesondere für Formteile, enthält zumindest einen folgender Bestandteile in folgender Menge (Anteile in Gewichtsprozent ohne Wasser):

| | |
|---|---|
| Flugasche | 3 bis 70 % |
| Tonerdeporzellanmehl | 10 bis 30 % |
| Hohlkugeln, insbesondere Glashohlkugeln, insbesondere | |
| Q-Cel der Firma | |
| Omega Minerals Germany GmbH | 5 bis 30 % |
| Flussspat | 2 bis 10 % |
| Schwerspat | 2 bis 10 % |
| Entschäumer | 0,2 bis 1 % |
| Netzmittel | 0,2 bis 1 % |
| Additiv als Grünbindemittel | 2 bis 12 % |
| insbesondere Kieselsol L300/30%, | 5 bis 20 % |

mit Acrylat versetztes Kieselsol etc.
Bei einer bevorzugten Ausführungsform der Erfindung wird auf Kieselsol als Additiv verzichtet.

Eine weitere Ausführungsform der Erfindung betrifft ein Feuerfestmaterial, bei welchem SiC und Quarz als Füllstoff verwendet wird. Diese Rezeptur enthält folgende Bestandteile:

| | |
|---|---|
| Füller: | |
| SiC | 25 bis 80 % |
| Quarz (optional) | 5 bis 50 % |
| | |
| Binder: | |
| Flugasche | 5 bis 40 % |
| | |
| Organische Additive (optimal) | |
| Verdicker | 0,1 bis 1 % |
| Verflüssiger | 0,1 bis 1 % |
| Entschäumer | 0,1 bis 1 % |
| Netzmittel | 0,1 bis 1 % |
| Grünbinder | 1 bis 6 % |

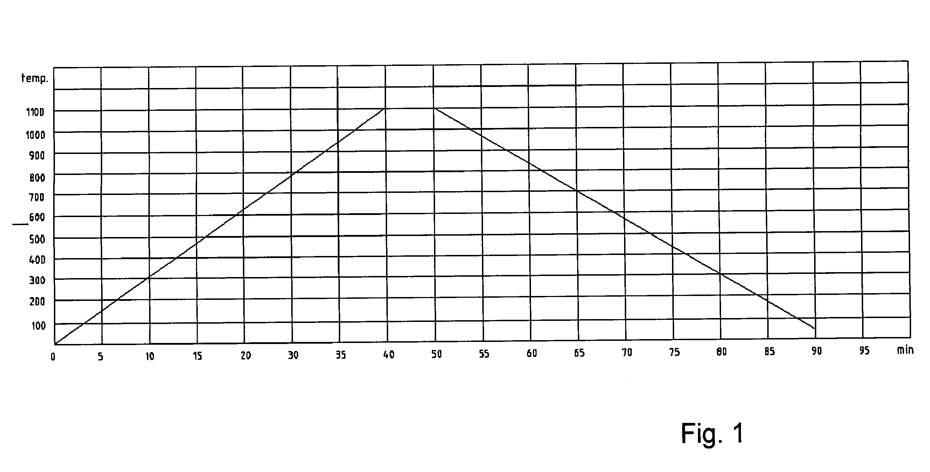

Fig. 1 zeigt eine beispielhafte Temperaturführung bei der Herstellung eines Feuerfestmaterials, wobei die Temperatur gegen die Zeit aufgetragen ist. Verwendet wird beispielsweise ein gasbeheizter Tunnelofen.

Innerhalb der ersten 30 min wird der Ofen auf ca. 800 °C aufgeheizt. Durch diese schnelle Temperaturerhöhung von etwa 25 °C/min wird ermöglicht, Flugasche als Bindemittel verwenden zu können.

Bei etwa 1100 °C wird die Temperatur etwa 10 min gehalten, anschließend wird der Ofen in etwa einer dem Aufheizvorgang entsprechenden Geschwindigkeit abgekühlt.

Es lassen sich bei der Herstellung von erfindungsgemäßen Feuerfestmaterialen Prozesszeiten von 90 min erreichen.

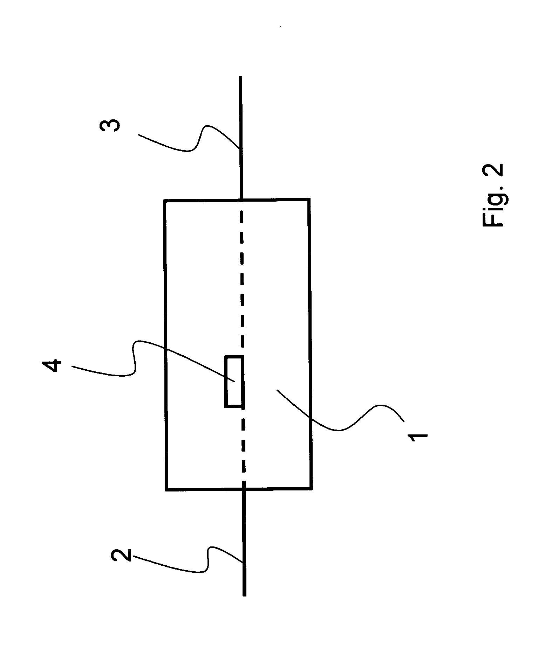

Bezug nehmend auf Fig. 2 soll der Herstellungsprozess eines Filters 4 anhand eines schematisch dargestellten Ausführungsbeispiels erläutern. Ein mit einem Flugasche haltigen Schlicker gefüllter Schaumstoffrohling wird getrocknet und über einen Ofeneinlauf 2 in den bereits auf etwa 1100 °C vorgeheizten Ofen 1 eingefahren. Dort verweilt der Filter 4 bei einer vorgegebenen Haltezeit. Nach Beendigung des Brennprozesses verlässt der Filter 4 über den Ofenauslauf 3 den Ofen. Die Verweilzeit beträgt lediglich etwa 15 min.

Es versteht sich, dass die Erfindung nicht auf eine Kombination vorstehend beschriebener Merkmale beschränkt ist, sondern dass der Fachmann sämtliche Merkmale der Erfindung, soweit dies sinnvoll ist, kombinieren wird.

## Patentansprüche

1. Verfahren zur Herstellung eines Feuerfestmaterials, insbesondere eines Filters, wobei ein Schlicker durch eine Temperaturbehandlung verfestigt wird,
**dadurch gekennzeichnet, dass** Flugasche dem Schlicker als Bindemittel zugesetzt wird und der Schlicker derart schnell erwärmt wird, dass das Material nicht zerfällt.

2. Verfahren zur Herstellung eines Feuerfestmaterials nach dem vorstehenden Anspruch, **dadurch gekennzeichnet, dass** der Schlicker derart schnell erwärmt wird, dass die Flugasche als Bindemittel wirkt und die Form des Schlickers im Wesentlichen erhalten bleibt.

3. Verfahren zur Herstellung eines Feuerfestmaterials nach Anspruch 1, **dadurch gekennzeichnet, dass** während der Temperaturbehandlung zwischen einer Temperatur von 300 °C und 700 °C zumindest zeitweise der Temperaturanstieg mehr als 3 °C/min, bevorzugt mehr als 7 °C/min und besonders bevorzugt mehr als 10 °C/min beträgt.

4. Verfahren zur Herstellung eines Feuerfestmaterials nach einem der vorstehenden Ansprüche, **dadurch gekennzeichnet, dass** während der Temperaturbehandlung zwischen einer Temperatur von 300 °C und 700 °C zumindest zeitweise der Temperaturanstieg weniger als 50 °C/min, bevorzugt weniger als 40 °C/min und besonders bevorzugt weniger als 30 °C/min beträgt.

5. Verfahren zur Herstellung eines Feuerfestmaterials nach einem der vorstehenden Ansprüche, **dadurch gekennzeichnet, dass** dem Schlicker kein weiteres Bindemittel oder ein Bindemittel, das vor dem Einsetzen der Verfestigung, insbesondere vor dem Einsetzen eines Bindephase- und/oder Sinterprozesses, sich verflüchtigt oder verbrennt, zugesetzt wird.

6. Verfahren zur Herstellung eines Feuerfestmaterials, insbesondere von Gießrinnen und Gießdrüsen, Gießstropfen und Filterboxen, nach einem der vorstehenden Ansprüche,
**dadurch gekennzeichnet, dass** während der Temperaturbehandlung oberhalb einer Temperatur von 750 °C, vorzugsweise während einer Konsolidierung oder einer Sinterung, der Temperaturanstieg mehr als 100°C/h, bevorzugt mehr als 200°C/h beträgt.

7. Verfahren zur Herstellung eines Feuerfestmaterials nach einem der vorstehenden Ansprüche, **dadurch gekennzeichnet, dass** eine Maximaltemperatur im Wesentlichen zwischen 5 und 60 min, bevorzugt zwischen 10 und 20 min gehalten wird.

8. Verfahren zur Herstellung eines Feuerfestmaterials nach einem der vorstehenden Ansprüche, **dadurch gekennzeichnet, dass** der Schlicker, bezogen auf die Masse, mehr als 30%, bevorzugt mehr als 50% und besonders bevorzugt mehr als 60% Flugasche enthält.

9. Verfahren zur Herstellung eines Feuerfestmaterials nach einem der vorstehenden Ansprüche, **dadurch gekennzeichnet, dass** Schritt der Temperaturbehandlung, insbesondere einer Bindephase und/oder eines Sinterprozess, weniger als 5 Stunden, bevorzugt weniger als 3 Stunden und besonders bevorzugt weniger als 2 Stunden durchgeführt wird.

10. Verfahren zur Herstellung eines Feuerfestmaterials nach einem der vorstehenden Ansprüche, **dadurch gekennzeichnet, dass** die Temperaturbehandlung mit mehr als 680 °C, bevorzugt mit mehr als 850 °C und besonders bevorzugt mit mehr als 900 °C durchgeführt wird.

11. Verfahren zur Herstellung eines Feuerfestmaterials nach einem der vorstehenden Ansprüche, **dadurch gekennzeichnet, dass** die Temperaturbehandlung mit weniger als 1500 °C, bevorzugt mit weniger als 1200 °C durchgeführt wird.

12. Feuerfestmaterial, insbesondere Filter, Schlichte, Speiser, Kleber oder Formteile und insbesondere zur Verwendung für die Gießereitechnik ausgebildet, herstellbar mit einem Verfahren nach einem der vorstehenden Ansprüche, wobei das Feuerfestmaterial Flugasche als Binder umfasst.

13. Feuerfestmaterial nach einem der vorstehenden Ansprüche, **dadurch gekennzeichnet, dass** das Feuerfestmaterial mehr als 5%, bevorzugt mehr als 10% Flugasche als Binder aufweist.

14. Feuerfestmaterial nach einem der vorstehenden Ansprüche, **dadurch gekennzeichnet, dass** das Feuerfestmaterial eine Reindichte zwischen 2 g/cm³ und 4 g/cm³ aufweist.

15. Feuerfestmaterial nach einem der vorstehenden Ansprüche, **dadurch gekennzeichnet, dass** das Feuerfestmaterial eine Festigkeit von mehr als 0,15 MPa, vorzugsweise mehr als 1,5 MPa und besonders bevorzugt mehr als 4 MPa aufweist.
